# FASCICULE DE BREVET EUROPEEN

(11) **EP 0 657 657 B1**
(45) Date de publication et mention de la délivrance du brevet: **10.03.1999**
(21) Numéro de dépôt: 94402819.0
(22) Date de dépôt: 08.12.1994
(51) Int. Cl.: F16B 5/06

(54) **Elément de montage d'accessoires sur une paroi perforée**
Element zur Montage von Zubehör an einer perforierten Mauer
Element for mounting accessories on a perforated wall

(30) Priorité: 13.12.1993 FR 9314913
(43) Date de publication de la demande: 14.06.1995
(73) Titulaire: LEGRAND, F-87045 Limoges Cédex (FR); LEGRAND SNC, F-87045 Limoges (FR)
(72) Inventeur: Decore, Bertrand, F-72650 La Chapelle Saint Aubin (FR); Jadaud, Alain, F-72140 Tennie (FR)
(74) Mandataire: CABINET BONNET-THIRION

(56) Documents cités:
- EP-A- 0 519 856
- DE-A- 2 921 957
- GB-A- 2 125 878
- GB-A- 2 138 488
- US-A- 3 893 208
- US-A- 4 200 900
- US-A- 4 422 222
- US-A- 4 681 288

## Description

La présente invention concerne un élément permettant le montage d'accessoires sur une paroi perforée, notamment de profilé, ce dernier pouvant être par exemple un chemin de câbles.

Les chemins de câbles sont munis de perforations pour permettre notamment la fixation d'accessoires, par exemple un élément de cloisonnement, un collier de serrage de câbles ou autres.

La fixation de l'accessoire peut s'opérer de manière classique à l'aide d'un système de boulons coopérant avec une perforation ménagée à cet effet dans l'accessoire et une perforation de la paroi du chemin de câbles.

On a aussi proposé un système dit "quart de tour" en une seule pièce qui comporte une gorge entre une tête et une semelle présentant la forme oblongue de la perforation de la paroi. La pièce est orientée de manière que la semelle traverse la perforation ménagée dans l'accessoire et une perforation oblongue de la paroi. On fait ensuite pivoter la pièce d'un quart de tour à l'aide d'un outil coopérant avec une empreinte ménagée à cet effet dans la tête de la pièce de manière à bloquer la semelle en travers de la perforation de la paroi.

Ces moyens de fixation de l'accessoire à la paroi présentent tous l'inconvénient majeur de nécessiter un outil.

Pour éviter l'emploi d'un outil on a proposé, notamment dans le document GB-A-2 125 878, un élément de montage, pour le montage d'un accessoire sur une paroi munie de perforations, comportant, d'une part, des moyens destinés à coopérer avec la paroi pour assurer sa fixation à ladite paroi et, d'autre part, des moyens destinés à coopérer avec l'accessoire pour assurer la fixation dudit accessoire, les moyens destinés à coopérer avec la paroi comprenant, d'une part, une semelle adaptée à porter sur l'une des faces de la paroi et, d'autre part, des doigts d'encliquetage adaptés à coopérer avec l'autre face de la paroi, les moyens destinés à coopérer avec l'accessoire étant agencés sur un plot disposé en saillie sur la semelle. En fait, l'élément de montage selon ce document est un élément entretoise destiné à écarter deux plaques l'une par rapport à l'autre en les positionnant relativement.

La présente invention a pour but de pallier cet inconvénient et pour objet un élément de montage du genre ci-dessus permettant de disposer l'accessoire de manière très proche de la paroi.

Pour ce faire, et selon l'invention, un élément de montage du genre ci-dessus est caractérisé par le fait que non seulement le plot mais également les doigts d'encliquetage se dressent sur la semelle.

Une telle conception permet l'aménagement de moyens de fixation de l'accessoire non seulement ne nécessitant pas d'outil mais également permettant de placer l'accessoire proche de la paroi.

Ainsi, selon un mode de réalisation possible où l'élément selon l'invention est destiné au montage d'un élément de cloisonnement, les moyens de fixation sont des saillies ménagées sur le plot qui permettent un encliquetage de l'élément de cloisonnement, ce dernier étant conformé à cet effet.

L'élément de montage selon l'invention peut également servir à l'accrochage d'un collier de serrage de câbles. Il est alors ménagé un évidemment dans le plot pour le passage du collier.

On peut prévoir avantageusement des moyens permettant à l'élément de montage de s'adapter à des épaisseurs différentes de parois, par exemple deux ailettes latérales relevées adaptées à fléchir.

D'autres caractéristiques sont définies dans des revendications dépendantes.

L'invention a également pour objet un chemin de câbles comportant une paroi de fond, munie de perforations, et un accessoire qui y est fixé par un élément de montage tel que ci-dessus ; l'accessoire peut être par exemple un élément de cloisonnement ou un collier de serrage de câbles.

La présente invention sera mieux comprise et d'autres avantages apparaîtront à la lumière de la description qui va suivre d'un exemple de réalisation faite en référence aux dessins annexés sur lesquels :
- la figure 1 est une vue en perspective montrant un élément de montage selon un exemple de réalisation ;
- la figure 2 est une vue en perspective illustrant l'utilisation de l'élément de montage de la figure 1 pour la fixation d'un élément de cloisonnement;
- la figure 3 est une vue en coupe selon la ligne III-III de la figure 2 ; et
- la figure 4 est une vue en coupe selon la ligne IV-IV de la figure 2.

Selon l'exemple de réalisation choisi et représenté sur les figures, l'élément de montage est réalisé d'une pièce par moulage. Il comprend une semelle 10 constituée de deux ailettes latérales 11A, 11B formant avec une portion centrale 11 de la semelle 10 un angle obtus et reliées chacune par une ligne de pliage, respectivement 12A, 12B. Ici, l'angle est de 160°. Le bord 13A, 13B des ailettes latérales 11A, 11B, est recourbé vers le bas de manière à s'étendre dans un plan parallèle au plan contenant la portion centrale 11 de la semelle 10.

Dans chaque ailette latérale 11A, 11B, est pratiquée une découpe en "U", respectivement 14A, 14B, avec enlèvement de matière. La base du "U" est disposée au pied d'un plot 30 de forme globalement parallélépipédique disposé en saillie sur la portion centrale 11 de la semelle 10 et chevauche une zone centrale de la ligne de pliage 12A, 12B correspondante. Les branches du "U" sont dirigées vers l'extrémité des ailettes latérales 11A, 11B.

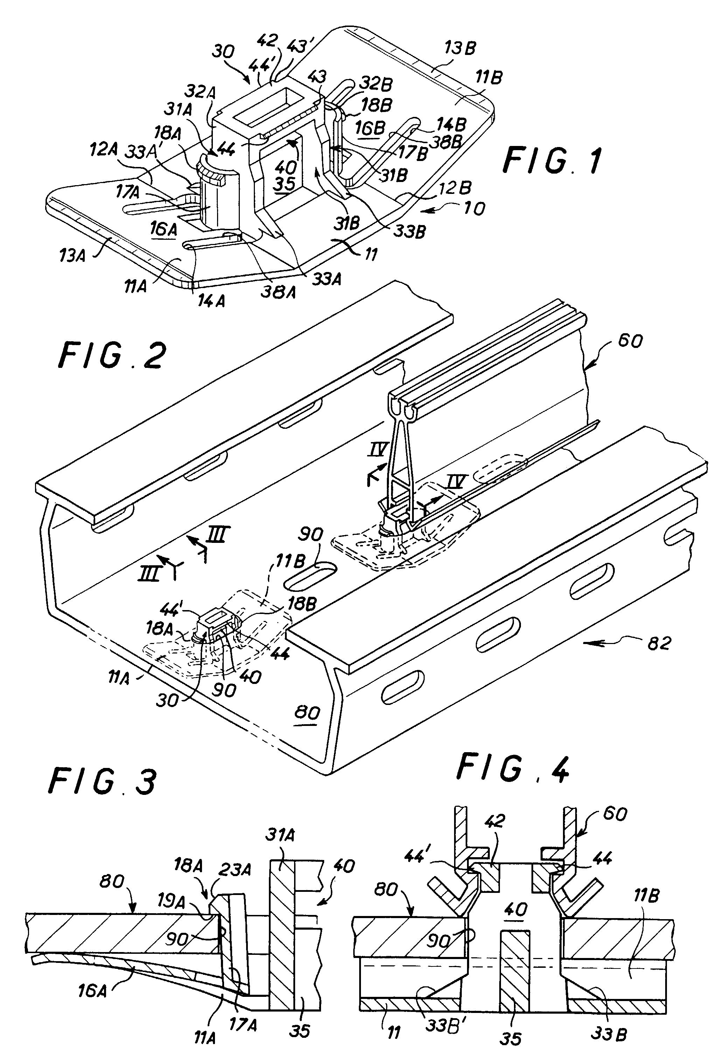

Les découpes en "U" 14A, 14B définissent chacune une languette respectivement 16A, 16B, qui est adaptée à fléchir autour de sa zone de raccordement avec l'ailette associée 11A, 11B. A l'extrémité de chaque languette 16A, 16B se dresse un doigt d'encliquetage 17A, 17B globalement perpendiculairement à la portion centrale 11 de la semelle 10, qui porte à son extrémité une saillie formant crochet 18A, 18B, qui s'étend globalement perpendiculairement selon une direction opposée au plot 30. En coupe, comme on le voit mieux sur la figure 3, les crochets 18A, 18B, présentent un retour d'appui 19A, 19B, qui s'étend globalement perpendiculairement à la direction générale des doigts d'encliquetage 17A, 17B et une arête supérieure biseautée 23A, 23B. Les doigts d'encliquetage 17A, 17B forment avec la languette 16A, 16B correspondante un angle inférieur à 90°, ici 70°. Ils présentent un profil bombé vers l'extérieur avec une nervure longitudinale de raidissement (non représentée).

Les doigts 17A, 17B et le plot 30 présentent des dimensions telles que ce dernier dépasse en hauteur, la hauteur des doigts 17A, 17B correspondant approximativement aux 2/3 de la hauteur du plot. La zone dépassante du plot 30 va servir à l'aménagement de moyens de montage d'accessoires, tels que cloison ou collier comme il sera expliqué plus loin.

Le plot 30 présente deux montants latéraux 31A, 31B, chacun avec une zone terminale supérieure 32A, 32B rétrécie et une base élargie par deux renforts latéraux 33A, 33A', 33B, 33B'. Les doigts 17A, 17B d'encliquetage sont situés de part et d'autre du plot 30 mais espacés de ce dernier d'une distance correspondant à la largeur de la base de la découpe en "U". Une entretoise de raidissement 35 relie les deux montants 31A, 31B du plot 30.

Une lumière 40 est pratiquée dans la partie supérieure de l'entretoise 35, qui correspond à la zone dépassante du plot par rapport aux doigts d'encliquetage 17A, 17B. Cette lumière est adaptée à l'accrochage d'un ou plusieurs colliers. Sur une partie centrale des bords latéraux 43, 43' de la face supérieure 42 sont ménagées des saillies, formant chacune un rail 44, 44', qui sont prévues pour la fixation par encliquetage d'un élément de cloisonnement. A cet effet, les saillies ont leur arête supérieure biseautée.

Des évidements sont visibles sur les figures mais ne sont pas décrits ici car ils interviennent uniquement au niveau du procédé de fabrication.

A titre d'exemple, la figure 2 illustre l'utilisation de l'élément de montage décrit ci-dessus pour la fixation d'un élément de cloisonnement 60 dans la paroi de fond 80 d'un chemin de câbles 82.

La première opération consiste à fixer l'élément de montage sur l'une des perforations 90 de la paroi 80. Pour cela, on introduit le plot 30 de l'élément de montage dans la perforation depuis l'extérieur vers l'intérieur du chemin de câbles jusqu'à encliquetage des crochets 18A, 18B sur les bords opposés de la perforation du côté interne du chemin de câbles (voir figure 3) . La sollicitation des arêtes supérieures biseautées 23A, 23B provoque, de manière classique, l'effacement des crochets 18A, 18B, tandis que les retours 19A, 19B de ces derniers viennent en prise avec les bords de la perforation. Les ailettes latérales 11A, 11B viennent porter contre la face externe de la paroi 80, plus ou moins "étalées" selon l'épaisseur de cette dernière. De même, les languettes 16A, 16B portant les doigts d'encliquetage 17A, 17B se retrouvent plus ou moins fléchies au dessus des ailettes 11A, 11B comme cela est représenté sur la figure 3 selon l'épaisseur de la paroi 80. Les moyens de fixation d'accessoire, constitués dans cet exemple par la lumière d'accrochage 40 et les rails 44, 44' sont accessibles sur la portion du plot 30 qui se retrouve située à l'intérieur du chemin de câbles.

L'élément de cloisonnement 60 est équipé de rainures formant ensemble une glissière adaptée à coopérer par encliquetage avec les rails 44, 44' ménagés au sommet du plot 30 (voir figure 4).

Suivant la longueur de l'élément de cloisonnement, un ou plusieurs éléments de montage peuvent être utilisés.

Pour enlever l'élément de montage, il suffit de rapprocher les crochets 18A, 18B en direction du plot 30 et de pousser ce dernier hors de la perforation.

La présente invention ne se limite pas à la forme de réalisation et de mise en oeuvre décrite et représentée mais englobe toute variante d'exécution et ou de combinaison des divers éléments.

En particulier, l'élément de montage suivant l'invention peut être fixé à la paroi du profilé aussi bien par l'extérieur que par l'intérieur du profilé, depuis le côté recevant l'accessoire ou depuis le côté opposé.

Ainsi notamment, dans l'exemple décrit, le plot 30 pourrait être disposé saillant sur l'autre face de la portion centrale 11 de la semelle 10.

## Revendications

1. Elément de montage pour le montage d'un accessoire sur une paroi (80) munie de perforations (90), comportant, d'une part, des moyens (18A, 18B) destinés à coopérer avec la paroi pour assurer sa fixation à ladite paroi et, d'autre part, des moyens (44, 44' ; 40) destinés à coopérer avec l'accessoire pour assurer la fixation dudit accessoire (60), les moyens destinés à coopérer avec la paroi comprenant, d'une part, une semelle (10) adaptée à porter sur l'une des faces de la paroi (80) et, d'autre part, des doigts d'encliquetage (17A, 17B) adaptés à coopérer avec l'autre face de la paroi (80), les moyens destinés à coopérer avec l'accessoire étant agencés sur un plot (30) disposé en saillie sur la semelle (10), caractérisé par le fait que les doigts d'encliquetage (17A, 17B) se dressent également sur la semelle (10).

2. Elément de montage selon la revendication 1, caractérisé par le fait que les moyens destinés à coopérer avec la paroi (80) comportent des moyens d'adaptation (12A, 12B ; 11A, 11B) à l'épaisseur de ladite paroi (80).

3. Elément de montage selon l'une des revendications 1 ou 2, caractérisé par le fait que la semelle (10) est constituée de deux ailettes latérales (11A,11B) et d'une portion centrale (11) avec laquelle les deux ailettes latérales (11A, 11B) forment un angle obtus.

4. Elément de montage selon la revendication 3, caractérisé par le fait que les doigts d'encliquetage (17A,17B) se dressent chacun à l'extrémité d'une languette (16A,16B) définie dans une ailette latérale (11A,11B) et portent une saillie formant crochet (18A,18B), le plot (30) étant ménagé sur la portion centrale (11) de la semelle (10).

5. Elément de montage selon la revendication 4, caractérisé par le fait que des découpes en "U" (14A,14B) sont pratiquées dans les ailettes latérales (11A,11B) pour définir les languettes (16A,16B), les branches du "U" des découpes étant dirigées vers l'extrémité des ailettes latérales (11A,11B).

6. Elément de montage selon l'une quelconque des revendications précédentes, caractérisé par le fait que les moyens (44, 44') de fixation destinés à coopérer avec l'accessoire comportent des saillies permettant un encliquetage dudit accessoire (60).

7. Elément de montage selon la revendication 6, caractérisé par le fait que les saillies (44,44') sont constituées de rails continus parallèles.

8. Elément de montage selon l'une des revendications 1 à 5, caractérisé par le fait que les moyens (40) de fixation destinés à coopérer avec l'accessoire comprennent une lumière ménagée dans le plot (30) destinée à être traversée par un élément de l'accessoire.

9. Elément de montage selon l'une des revendications 1 à 8, caractérisé par le fait que la paroi perforée (80) est la paroi de fond d'un chemin de câbles (82).

10. Elément de montage selon les revendications 6 et 9, caractérisé par le fait que l'accessoire (60) est un élément de cloisonnement.

11. Elément de montage selon les revendications 8 et 9 , caractérisé par le fait que l'accessoire (40) est un collier de serrage de câbles.

12. Elément de montage selon l'une quelconque des revendications précédentes, caractérisé par le fait que le plot (30) présente deux montants latéraux (31A, 31B) reliés par une entretoise de raidissement (35).

13. Elément de montage selon l'une quelconque des revendications précédentes, caractérisé par le fait qu'il est réalisé d'un seul tenant.

## Patentansprüche

1. Montageelement für die Montage eines Zubehörs an einer mit Perforationen (90) versehenen Wand (80), das einerseits Mittel (18A, 18B) aufweist, die dazu bestimmt sind, mit der Wand zusamenzuwirken, um seine Befestigung an dieser Wand zu gewährleisten, und andererseits Mittel (44, 44'; 40), die dazu bestimmt sind, mit dem Zubehör zusammenzuwirken, um die Befestigung des Zubehörs (60) zu gewährleisten, wobei die zum Zusammenwirken mit der Wand bestimmten Mittel einerseits eine Sohle (10) aufweisen, die dafür ausgelegt ist, auf einer der Seiten der Wand (80) aufzuliegen, und andererseits Einrastfinger (17A, 17B), die dafür ausgelegt sind, mit der anderen Seite der Wand (80) zusammenzuwirken, wobei die zum Zusammenwirken mit dem Zubehör bestimmten Mittel auf einem Klotz (30) vorgesehen sind, der auf der Sohle (10) vorstehend angeordnet ist, dadurch gekennzeichnet, daß die Einrastfinger (17A, 17B) sich ebenfalls auf der Sohle (10) erheben.

2. Montageelement nach Anspruch 1, dadurch gekennzeichnet, daß die zum Zusammenwirken mit der Wand (80) bestimmten Mittel Mittel (12A, 12B; 11A, 11B) zur Anpassung an die Dicke der Wand (80) aufweisen.

3. Montageelement nach einem der Ansprüche 1 oder 2, dadurch gekennzeichnet, daß die Sohle (10) aus zwei seitlichen Flügeln (11A, 11B) und aus einem mittleren Bereich (11) besteht, mit dem die beiden seitlichen Flügel (11A, 11B) einen stumpfen Winkel bilden.

4. Montageelement nach Anspruch 3, dadurch gekennzeichnet, daß die Einrastfinger (17A, 17B) jeweils sich am Ende einer Zunge (16A, 15B) erheben, die in einem seitlichen Schenkel (11A, 11B) abgegrenzt ist, und einen einen Haken (18A, 18B) bildenden Vorsprung tragen, wobei der Klotz (30) auf dem mittleren Bereich (11) der Sohle (10) vorgesehen ist.

5. Montageelement nach Anspruch 4, dadurch gekennzeichnet, daß U-förmige Ausschnitte (14A, 14B) in den seitlichen Flügeln (11A, 11B) vorgesehen sind, um die Zungen (16A, 16B) abzugrenzen, wobei die Schenkel des U der Ausschnitte auf das Ende der seitlichen Flügel (11A, 11B) zu gerichtet sind.

6. Montageelement nach einem der vorhergehenden Ansprüche, dadurch gekennzeichnet, daß die zum Zusammenwirken mit dem Zubehör bestimmten Befestigungsmittel (44, 44') Vorsprünge aufweisen, die ein Einrasten des Zubehörs (60) gestatten.

7. Montageelement nach Anspruch 6, dadurch gekennzeichnet, daß die Vorsprünge (44, 44') aus parallelen Schienen bestehen.

8. Montageelement nach einem der Ansprüche 1 bis 5, dadurch gekennzeichnet, daß die zum Zusammenwirken mit dem Zubehör bestimmten Befestigungsmittel (40) eine in dem Klotz (30) vorgesehene Öffnung aufweisen, die dazu bestimmt ist, von einem Element des Zubehörs durchquert zu werden.

9. Montageelement nach einem der Ansprüche 1 bis 8, dadurch gekennzeichnet, daß die perforierte Wand (80) die Bodenwand eines Kabelkanals (82) ist.

10. Montageelement nach den Ansprüchen 6 und 9, dadurch gekennzeichnet, daß das Zubehör (60) eine Trennwandelement ist.

11. Montageelement nach den Ansprüchen 8 und 9, dadurch gekennzeichnet, daß das Zubehör (40) eine Kabelklemmschelle ist.

12. Montageelement nach einem der vorhergehenden Ansprüche, dadurch gekennzeichnet, daß der Klotz (30) zwei seitliche Ständer (31A, 31B) aufweist, die durch einen Versteifungssteg (35) verbunden sind.

13. Montageelement nach einem der vorhergehenden Ansprüche, dadurch gekennzeichnet, daß es einstückig ausgeführt ist.

## Claims

1. A fitting element for fitting an accessory on a wall (80) provided with perforations (90), comprising on the one hand means (18A, 18B) intended to co-operate with the wall to provide for fixing thereof to said wall and, on the other hand, means (44, 44'; 40) intended to co-operate with the accessory to provide for fixing of said accessory (60), the means intended to co-operate with the wall comprising on the one hand a plate (10) adapted to bear against one of the faces of the wall (80) and on the other hand latching fingers (17A, 17B) adapted to co-operate with the other face of the wall (80), the means intended to co-operate with the accessory being arranged on a protrusion (30) disposed in projecting relationship on the plate (10), characterised in that the latching fingers (17A, 17B) also stand up on the plate (10).

2. A fitting element according to claim 1 characterised in that the means intended to co-operate with the wall (80) comprise means (12A, 12B; 11A, 11B) for adaptation to the thickness of said wall (80).

3. A fitting element according to one of claims 1 and 2 characterised in that the plate (10) is formed by two lateral limb portions (11A, 11B) and a central portion (11) with which the two lateral limb portions (11A, 11B) form an obtuse angle.

4. A fitting element according to claim 3 characterised in that the latching fingers (17A, 17B) each stand up at the end of a tongue (16A, 16B) defined in a lateral limb portion (11A, 11B) and carry a hook-forming projection (18A, 18B), the protrusion (30) being provided on the central portion (11) of the plate (10).

5. A fitting element according to claim 4 characterised in that U-shaped cut-outs (14A, 14B) are provided in the lateral limb portions (11A, 11B) to define the tongues (16A, 16B), the limbs of the U-shape of the cut-outs being directed towards the ends of the lateral limb portions (11A, 11B).

6. A fitting element according to any one of the preceding claims characterised in that the fixing means (44, 44') intended to co-operate with the accessory comprise projections permitting latching engagement of said accessory (60).

7. A fitting element according to claim 6 characterised in that the projections (44, 44') are formed by continuous parallel rails.

8. A fitting element according to one of claims 1 to 5 characterised in that the fixing means (40) intended to co-operate with the accessory comprise an opening in the protrusion (30), the opening being intended to have an element of the accessory passing therethrough.

9. A fitting element according to one of claims 1 to 8 characterised in that the perforated wall (80) is the bottom wall of a cable duct (82).

10. A fitting element according to claims 6 and 9 characterised in that the accessory (60) is a partitioning element.

11. A fitting element according to claims 8 and 9 characterised in that the accessory (40) is a cable clamp collar.

12. A fitting element according to any one of the preceding claims characterised in that the protrusion (30) has two lateral uprights (31A, 31B) connected by a stiffening cross-brace (35).

13. A fitting element according to any one of the preceding claims characterised in that it is made in one piece.
